# EUROPÄISCHE PATENTSCHRIFT

(11) **EP 0 430 871 B1**
(45) Veröffentlichungstag und Bekanntmachung des Hinweises auf die Patenterteilung: **19.07.1995**
(21) Anmeldenummer: 90810857.4
(22) Anmeldetag: 07.11.1990
(51) Int. Cl.: C09B 67/42, B01F 17/00, C09B 67/38, C09B 67/46

(54) **Wässrige Farbstoff-Präparate**
Aqueous dyestuff-preparations
Préparations aqueuses de colorants

(30) Priorität: 16.11.1989 CH 4118/89
(43) Veröffentlichungstag der Anmeldung: 05.06.1991
(73) Patentinhaber: CIBA-GEIGY AG, 4002 Basel (CH)
(72) Erfinder: Koci, Zdenek, CH-4102 Binningen (CH)

(56) Entgegenhaltungen:
- EP-A- 0 143 077
- EP-A- 0 202 775
- WO-A-88/03133
- FR-A- 2 380 065
- GB-A- 1 492 093
- GB-A- 2 090 876

## Beschreibung

Die vorliegende Erfindung betrifft wässrige Farbstoffpräparate, ein Verfahren zu deren Herstellung und deren Verwendung zum Farben, insbesondere zum Bedrucken von synthetischen Textilmaterialien unter Verwendung von synthetischen Verdickungen oder zum Transferdruck vor allem auf Papier unter Verwendung von synthetischen Verdickungen.

In den letzten 10-15 Jahren konnten aus wirtschaftlichen und ökologischen Gründen sich beim Druck von synthetischen Textilmaterialien wie z.B. Polyester, Polyamid, Polyacrylnitril neben den bekannten natürlichen Verdickern oder Halbemulsionsverdickern, die vorwiegend Benzin verwenden, nun auch die synthetischen Verdicker, z.B. die hochmolekularen Polyacrylsäuren mit Molekular-Gewicht über 1 Million, ausbreiten. Fur den Druck von synthetischen Textilmaterialien ev. Papier unter Verwendung von verschiedenen hochmolekularen Mono- oder copoylmeren Polycarboxylsäuren konnte aber ein überwiegender Teil von Dispersionsfarbstoffen nicht verwendet werden, da die Dispersionsfarbstoffe in einer Pulver- oder flüssigen Handelsform mit den üblichen anionaktiven Dispergatoren, wie z.B. Naphthalinsulfonsäure-Formaldehydkondensate, Ligninsulfonate, sulfatierte Oele, Kondensationsprodukte aus Kresol, Formalin und Naphthalinsulfonsäure, wegen ihrem organischen und anorganischen Elektrolytgehalt eine sehr starke Verflüssigung der synthetischen Verdicker verursachen, weshalb sie aus solchen Druckpasten nicht applizierbar sind.

Es wurde weiter festgestellt, dass für die synthetischen Verdicker am besten Farbstoffpräparate mit nichtionogenen Dispergatoren und weiteren neutralen Komponenten am besten geeignet sind, weil sie keine oder nur eine minimale Verflüssigung der Druckpaste verursachen und aus solchen Druckpasten sehr gut applizierbar sind. Der Nachteil bei solchen flüssigen Farbstoffpräparaten mit nichtionogenen Dispergatoren ist aber, dass diese sehr schlecht redispergierbar sind. Nach der relativ kurzen Lagerung trocknen sie an den Wanden der Gebinde schnell aus, unter Agglomeration der Farbstoff-Dispersion. Solche Farbstoffpräparate verursachen dann in der Applikation einen unegalen, stippenhaltigen Druck. Diese schlechte Redispergierbarkeit von nichtionogenen Farbstoff-Präparaten kann nicht oder nur unwesentlich durch die Verwendung von optimalen, hygroskopischen Feuchthaltemitteln wie z.B. Aethylenglykol, Propylenglykol, Glyzerin, Sorbit-Alkohol auch in den verhöhten Mengen in der Farbstoff-Präparation verbessert werden.

Aus diesen Gründen wurden Farbstoff-Präparate vorgeschlagen, die neben einem nichtionogenen Dispergator auch einen üblichen anionaktiven Dispergator enthalten.

Aber auch diese Farbstoff-Präparate, besitzen eine nur minimale verbesserte Redispergierbarkeit und wegen der Menge und Art des verwendeten anionaktiven Dispergators ev. seiner Verschmutzung mit restlichen anorganischen Salzen aus der Herstellung, verflüssigen oft solche Präparate die synthetische Verdickung zu stark, was zu weniger egalen, unscharfen Druck führt.
In dem EP-A 56'523 wurde deshalb vorgeschlagen, sulfatierte ev. phosphatierte oxaethylierte, nicht alkylierte Aromaten (Phenole) für die Herstellung von Farbstoff-Präparaten mit verbesserten Verhalten bei der Applikation mit synthetischen und natürlichen Verdickem zu verwenden. In diesem Patent wurden auch als Vergleich-Beispiel im Beispiel 49 (Tabelle 4) 4 Nonylphenol-4 bis 14 MolAÖ-Sulfate verwendet und wegen der schlechten Redispergierbarkeit solcher Präparate als ungeeignet gefunden.

FR-A-2 380 065 offenbart eine stabile wäßrige Dispersion, die mindestens 60 Gew.-% Talkum bezogen auf die Dispersion enthält. EP-A-0 143 077 offenbart ein Färbeverfahren, bei dem Farbstofflösungen mit einem geringen Farbstoffgehalt bei Temperaturen von 70-100°C mit Hilfe von hydrophobierend wirkenden Tensiden hergestellt werden.

Es wurde nun überraschenderweise gefunden, dass spezifische Farbstoff-Präparate, die sehr schwach anionaktiv wirkende, höher oxaethylierte und sulfatierte Alkylphenole oder Fettalkohole enthalten, all die vorstehend genannten Nachteile überwinden und vor allem neben dem nur minimalen Einfluss auf die Verflüssigung des synthetischen Verdickers auch eine unerwartete sehr gute Redispergierbarkeit besitzen und damit gute applikatorische Resultate im Druck, ohne Stippenbildung, ergeben.

Gegenstand der vorliegenden Erfindung sind somit wässrige Farbstoffpräparate, dadurch gekennzeichnet, dass sie enthalten:
a) mindestens einen Dispersionsfarbstoff in einer Menge von 15 bis 45 Gew.-% bezogen auf das Farbstoffpräparat,
b) ein mit mindestens 20 Mol Aethylenoxyd äthoxyliertes, sulfatiertes Alkylphenol mit 2 bis 12 Kohlenstoffatomen im Alkylrest oder einen mit mindestens 20 Mol Aethylenoxyd äthoxylierten, sulfatierten Fettalkohol in einer Menge von 1 bis 10 Gew.-% bezogen auf das Farbstoffpräparat,
c) gegebenenfalls Betain-Monohydrat,
d) gegebenenfalls einen anionischen Dispergator der allgemeinen Formel I 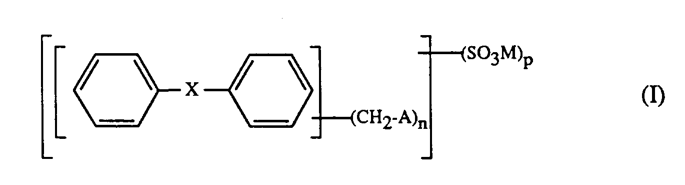 worin
   X die direkte Bindung oder Sauerstoff,
   A Wasserstoff oder den Rest einer aromatischen Verbindung, welcher mittels eines Ringkohlenstoffatoms an die Methylengruppe gebunden ist,
   n und p unabhängig voneinander je eine Zahl von 1 bis 4, und
   M ein einwertiges Kation, bedeuten, und gegebenenfalls Kondensate dieser Verbindungen mit Formaldehyd sowie
e) gegebenenfalls weitere Hilfsmittel, und
f) Wasser.

Als Komponente a) werden vor allem Farbstoffe verwendet, die bei einer Temperatur von 20°C eine Wasserlöslichkeit von weniger als 1 g/l Wasser aufweisen und chemisch den verschiedensten Klassen angehören. Beispielsweise handelt es sich von Carbon- und/oder Sulfonsäuregruppen freie Nitro-, Aminoketon-, Ketoninim-, Methin-, Polymethin-, Diphenylamin-, Chinolin-, Benzimidazol-, Xanthen-, Oxazin- oder Cumarinfarbstoffe und insbesondere um Anthrachinon- und und Azofarbstoffe, wie Mono- oder Disazofarbstoffe. Bevorzugte Farbstoffe sind Dispersionsfarbstoffe, die z.B. im Colour Index unter "Disperse dyes", aufgeführt sind. Unter dem Begriff Dispersionsfarbstoffe können aber auch andere wasserunlösliche Farbstoffe, wie Pigmentfarbstoffe oder Solvent-Farbstoffe verwendet werden, falls sie in den verschiedenen Druck- und Färbeverfahren von synthetischen Materialien eine gute, egale und echtheitstabile Färbung, die den Dispersionsfarbstoffen entspricht, erreichen. Dazu sind besonders die niedermolekularen organischen Pigmentfarbstoffe oder ausgewählte Solventfarbstoffe, geeignet.
Die Pigment- und Solventfarbstoffe sind z.B. im Colour Index unter "Pigment dyes" und "Solvent dyes", aufgeführt.

Auch für den Transferdruck geeignete Farbstoffe sind geeignet. Es handelt sich hierbei vorzugsweise um in Wasser unlösliche bis schwerlösliche Farbstoffe, insbesondere Dispersionsfarbstoffe, welche bei atmosphärischem Druck zwischen 150 und 220°C zu mindestens 60 % in weniger als 60 Sekunden in den Dampfzustand übergehen, hitzestabil und unzersetzt transferierbar sind.

Bevorzugte Farbstoffpräparate enthalten den in Wasser unlöslichen bis schwerlöslichen Farbstoff in einer Menge von 15 bis 45, vorzugsweise 25 bis 35 Gew.-% bezogen auf das Farbstoffpräparat.

Als erfindungsgemäss verwendbare äthoxylierte, sulfatierte Alkylphenole oder Fettalkohole (Komponente b) kommen solche Produkte in Frage die mit mehr als 20 Mol insbesondere 20 bis 100 Mol Aethylenoxyd äthoxyliert sind. Als Alkylphenole werden dabei solche eingesetzt, die im Alkylrest 2 bis 12, vorzugsweise 8 bis 12 Kohlenstoffatome aufweisen. Besonders bevorzugt ist ein sulfatiertes 4-Nonylphenol äthoxyliert mit 35 Mol Aethylenoxyd und ein sulfatiertes Isooctylphenol äthoxyliert mit 25 Mol Aethylenoxyd. Bei den äthoxylierten, sulfatierten Fettalkoholen handelt es sich um solche die 6 bis 22 Kohlenstoffatome enthalten wie Taurylalkohol, Oleylalkohol, Stearylalkohol und Cetylalkohol; besonders gute Resultate werden insbesondere mit einem sulfatierten Talgfettalkohol äthoxyliert mit 32 oder 60 oder 77 Mol Aethylenoxyd erhalten. Durch den hohen Oxäthylierungsgrad und verbunden damit durch das relativ hohe Molekulargewicht sind diese sulfatierten, oxäthylierten Produkte sehr schwach anionaktiv und enthalten nur minimalste Mengen von Na-Ionen (allgemein unter 2 % Na^{⊕}-Gehalt). - Die ethoxylierte Komponente b) ist in einer Menge von vorzugsweise 1 bis 10 Gew.-%, und insbesondere 4 bis 6 Gew.-% bezogen auf das Farbstoffpräparat vorhanden.

Gegebenenfalls enthalten die erfindungsgemässen Farbstoffpräparate 0 bis 10 und insbesondere 3 bis 8 Gew.-% an Betain-Monohydrat (Komponente c) bezogen auf das Farbstoffpräparat.

Desweiteren können die erfindungsgemässen Farbstoffpräparate gegebenenfalls noch als Komponente d) einen anionischen Dispergator der allgemeinen Formel I 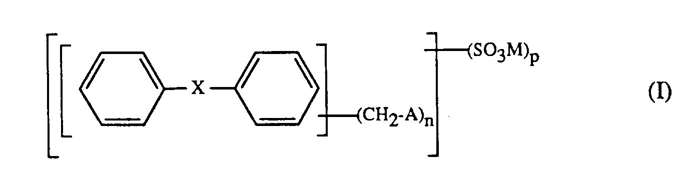
enthalten, worin X die direkte Bindung oder Sauerstoff, A Wasserstoff oder den Rest einer aromatischen Verbindung, welche mittels eines Ringkohlenstoffatoms an die Methylengruppe gebunden ist, M ein einwertiges Kation und n und p unabhängig voneinander je eine Zahl von 1 bis 4 bedeuten, sowie gegebenenfalls Kondensate dieser Verbindungen mit Formaldehyd.
Der Rest A stellt vorallem den Rest einer aromatischen Verbindung und insbesondere den Naphthalinrest dar und Me bedeutet vor allem Na, K, Li, Triäthanolamin und Triisopropanolamin.
In der Regel sind die Werte für n und p ganzzahlig. Sie können auch eine beliebige gebrochene Zahl im Bereich von 1 bis 4 bedeuten, z.B. 1,4-1,8-2,1 oder 3,2. Bevorzugt sind n und p unabhängig voneinander 1 oder 2.

Bedeutet A in der Verbindung der Formel I Wasserstoff so handelt es sich vorallem um einen sulfonierten Bis-tolyl-äther.

Insbesondere verwendet man als anionischen Dispergator einen solchen der Formel IA 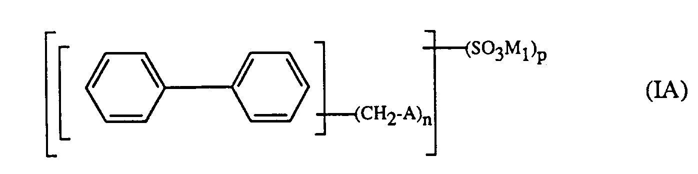
worin
A den Rest einer aromatischen Verbindung, welcher mittels eines Ringkohlenstoffatoms an die Methylengruppe gebunden ist,
M₁ Natrium, Kalium, Lithium, Triäthanolamin oder Triisopropanolamin und
n und p unabhängig voneinander je eine Zahl von 1 bis 4 bedeuten und vor allem einen solchen der allgemeinen Formel (IB) 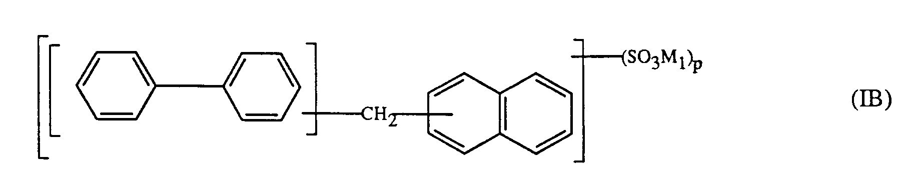
worin
M₁ Natrium, Kalium, Lithium, Triäthanolamin oder Triisopropanolamin bedeutet.

Diese anionischen Dispergatoren der Formel I werden zweckmässig so hergestellt, dass man eine mindestens zwei ersetzbare kernständige Wasserstoffatome aufweisende aromatische Verbindung mit einer Verbindung der allgemeinen Formel II 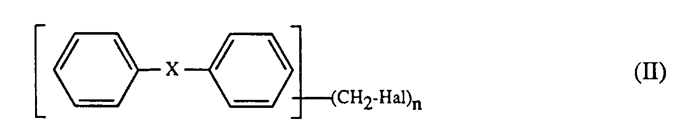
worin
X die direkte Bindung oder Sauerstoff
Hal Chlor oder Brom
n eine Zahl von 1 bis 4
bedeuten,
umsetzt und das Kondensationsprodukt sulfoniert. Man kann Kondensationsprodukte der angegebenen Art auch herstellen, indem man eine sulfonierte, mindestens zwei ersetzbare, kernständige Wasserstoffatome aufweisende aromatische Verbindung, mit einer Verbindung der Formel II umsetzt.

Die bei der Herstellung der Kondensationsprodukte als Ausgangsstoffe dienenden, mindestens zwei ersetzbare Wasserstoffatome aufweisenden aromatischen Verbindungen können ein- oder mehrkernige, besonders zweikernige aromatische Kohlenwasserstoffe sein, die gegebenenfalls substituiert sind. Als Substituenten kommen z.B. Alkylgruppen mit 1 bis 4 Kohlenstoffatomen, Alkoxygruppen mit 1 bis 4 Kohlenstoffatomen oder Halogen, wie z.B. Chlor in Betracht. Bevorzugt sind Naphthalinverbindungen, die mit Chlor oder Methyl substituiert sein können. Als Beispiele für ein- und mehrkernige aromatische Verbindungen seien hier genannt: Alkylbenzole wie Toluol, Xylole, Isopropylbenzol, Isobutylbenzol, tert.-Butylbenzol, Alkoxybenzol, wie Anisole, Phenetole, Butoxybenzol, weiter Diphenylalkane, Tetrahydronaphthalin, Naphthalin, Alkylnaphthaline, wie z.B. α- und β-Methylnaphthalin, sowie Acenaphthen, Anthracen, Perylen, Pyren und Dihydrophenanthren.

Besonders gut geeignet sind Naphthalin, oder Naphthalinsulfonsäuren. Selbstverständlich können auch Gemische dieser ein- und mehrkernigen aromatischen Verbindungen als Ausgangsstoffe verwendet werden.

Die ebenfalls als Ausgangsstoffe benötigten Verbindungen der Formel II werden z.B. durch Umsetzung von Diphenyl oder Diphenylether mit Formaldehyd und Halogenwasserstoff, wie Brom- oder vorzugsweise Chlorwasserstoff nach den in der US-A-3 004 072 oder IT-A-600 124 beschriebenen Methoden hergestellt.

Bevorzugte Ausgangsstoffe der Formel II sind Chlormethyldiphenyl und Chlormethyldiphenylether. Bei diesen Verbindungen handelt es sich meist um Isomerengemische mit 1 bis 3 Chlormethylgruppen, wobei sich z.B. die Chlormethylgruppen vorzugsweise in o- oder p-Stellung der beiden Benzolringe befinden. Demnach liegen auch die entsprechenden sulfonierten Kondensationsprodukte in der Regel als Gemische vor, insbesondere von mono- bis trisubstituierten Diphenyl- oder Diphenyletherprodukten. Je nach den Ausgangsmaterialien und den gewählten Reaktionsbedingungen bei der Herstellung der Kondensationsprodukte ändert sich das Verhältnis der Isomeren zueinander.

Die sulfonierten Kondensationsprodukte sind in der DE-A-235691 beschrieben.

Der erfindungsgemäss verwendbare anionische Dispergator weist vorzugsweise ein Verhältnis von Kohlenstoff zu organisch gebundenem Schwefel von >15:1 auf. Der anionische Dispergator wird vorzugsweise in einer salzarmen Form verwendet, dies bedeutet, dass die Elektrolytmenge im trockenen Dispergator, als Na₂SO₄ ausgedrückt, unter 1 Gew.-% beträgt.

Die zur Entsalzung des anionischen Dispergators bevorzugt verwendbare Umkehrosmose (UO)-Membranen bestehen im wesentlichen aus einem organischen Polymer, der mindestens an der Oberfläche durch Reste mit ionischen Gruppen modifiziert ist. Es können in dieser Weise modifizierte natürliche, halbsynthetische oder synthetische Polymere zu Membranen verarbeitet werden. Ein derart zu modifizierender polymerer Stoff enthält als reaktionsfähige Atome oder Gruppen beispielsweise Hydroxyl-, Halogen-, Halogenalkyl-, Amino und/oder Amidoximgruppen. Er kann dann mit geeigneten Verbindungen umgesetzt werden, die einerseits ionische Gruppen und andererseits mindestens eine unter Bildung einer chemischen (kovalenten) Bindung reaktionsfähige Gruppierung enthalten.

Beispielsweise können folgende polymere Verbindungen in der angegebenen Weise modifiziert werden:
- Celluloseacetate, z.B. solche mit niedrigem Acetylgruppengehalt, aber auch höher acylierte Cellulose, z.B. sog. Zweieinhalbacetat,
- Polyvinylalkohole,
- Polyacrylnitril oder Copolymere aus Acrylnitril und anderen ethylenisch ungesättigten Monomeren,
- Polysulfone
- Polystyrole
- Polyamide oder
- Polyimide.

Solche Membranen sind beispielsweise aus den US-A-4 604 204, 4 584 103, 4 753 725, 4 690 766, 4 477 634 und 4 720 345 bekannt.

Die Membranen können verschiedene Formen aufweisen, z.B. plattenförmig, blattförmig, röhrenförmig, in Form einer Tasche, eines Konus oder von Hohlfasern vorliegen. Um sie wirkungsvoll zur Stofftrennung einsetzen zu können, müssen sie in entsprechende Systeme (Module) integriert werden und in Anlagen (für die Druckpermeation) eingebaut werden.

Bei den beschriebenen Membranen, die man zur Trennung/Aufreinigung der genannten Ausgangslösungen bzw. -Suspensionen nach dem Prinzip der Ultrafiltration einsetzt, handelt es sich im wesentlichen um solche, die Trenngrenzen im Molekulargewichtsbereich von 300 bis 800, vorzugsweise 400 bis 500, aufweisen und symmetrisch oder insbesondere asymmetrisch sind. Wasser und gelöste Stoffe, die auf Grund ihres Molekulargewichts unterhalb der Trenngrenze liegen, permeieren unter Anwenden eines geringen bis mittleren Drucks leicht durch diese Membranen. Erfindungsgemäss werden Drucke von 10 bis 100 bar und vorzugsweise von 10 bis 30 bar angewendet. Der Druck kann z.B. mittels einer Pumpe ausgeübt werden. pH-Werte und Temperaturen können bei der Durchführung des Verfahrens je nach der verwendeten Membrane in weiten Grenzen schwanken.

Die erfindungsgemässen Farbstoffpräparate enthalten den anionischen Dispergator in einer Menge von 0 bis 4, vorzugsweise 1 bis 2 Gew.-% bezogen auf das Farbstoffpräparat.

Als weitere Komponente können die erfindungsgemässen Farbstoffpräparate noch Hilfsmittel in einer Gesamtmenge von etwa 10 bis 40 Gew.-% bezogen auf das Farbstoffpräparat enthalten. Im einzelnen handelt es sich vorzugsweise und zum Beispiel um:

Antischaummittel in einer Menge von 0,1 bis 1,0 Gew.-% bezogen auf das Farbstoffpräparat, wobei vorzugsweise eine Aethylenglykol-Lösung von 2,4,7,9-Tetramethyl-5-decyn-4,7-diol eingesetzt wird.

Konservierungsmittel in einer Menge von 0,2 bis 0,3 Gew.-% bezogen auf das Farbstoffpräparat, wie z.B. Chloracetamid oder Hydroxymethyl-chloracetamid.

Verdicker in einer Menge von 0,1 bis 1,0 Gew.-% bezogen auf das Farbstoffpräparat wie Hydroxyäthylcellulose, Polyvinylalkohol oder Na-Polystyrolsulfonat.

Gefrierschutzmittel in einer Menge von 10 bis 35 Gew.-% bezogen auf das Farbstoffpräparat wie Aethylenglykol, Propylenglykol, Glycerin, Sorbit-Alkohol, Diäthylenglykol, Triäthylenglykol, Tetraäthylenglykol, Dipropylenglykol, Diglycerin und Polyglycerine.

Die erfindungsgemässen Farbstoffpräparate sind vor allem gekennzeichnet durch ihre Lagerstabilität über mehrere Monate bei Temperaturen von minus 10°C bis plus 50°C und insbesondere durch ihre sehr gute Redispergierbarkeit; auch nach Eintrocknen an der Luft; dies ist vor allem im Vergleich zu gleichen, nicht sulfatierten, also nichtionogenen, äthoxylierten Verbindungen die eine schlechtere Redispergierbarkeit aufweisen überraschend und war nicht vorhersehbar.

Besonders gute Farbstoffpräparate enthalten:
a) mindestens einen Dispersionsfarbstoff in einer Menge von 15 bis 45 Gew.-% bezogen auf das Farbstoffpräparat,
b) 4-Nonylphenol äthoxyliert mit 35 Mol Aethylenoxyd, sulfatiert, oder Isooctylphenol äthoxyliert mit 25 Mol Aethylenoxyd sulfatiert, in einer Menge von 1 bis 10 Gew.-%, bezogen auf das Farbstoffpräparat,
c) 0 bis 10 Gew.-% Betain-Monohydrat,
d) 0 bis 4 Gew.-% des anionischen Dispergators der allgemeinen Formel (IB) 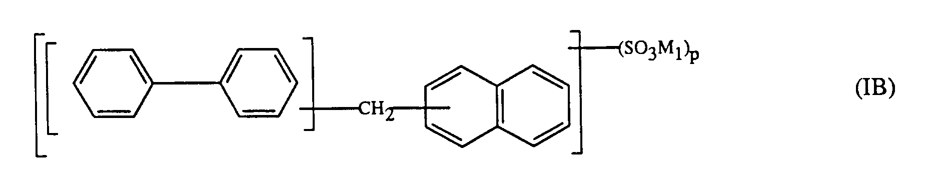 worin
   M₁ Natrium, Kalium, Lithium, Triäthanolamin oder Triisopropanolamin, und
   p eine Zahl von 1 bis 4 bedeuten,
e) 0,1 bis 1,0 Gew.-% Antischaummittel, und/oder
   0,2 bis 0,3 Gew.-% Konservierungsmittel, und/oder
   0,1 bis 1,0 Gew.-% Verdicker, und/oder
   10 bis 35 Gew.-% Gefrierschutzmittel, sowie
f) Wasser; oder
   a) mindestens einen Dispersionsfarbstoff, in einer Menge von 15 bis 45 Gew.-% bezogen auf das Farbstoffpräparat,
   b) Talgfettalkohol äthoxyliert mit 32 oder 60 oder 77 Mol Aethylenoxyd sulfatiert, in einer Menge von 1 bis 10 Gew.-%, bezogen auf das Farbstoffpräparat
   c) 0 bis 10 Gew.-% Betain-Monohydrat,
   d) 0 Gew.-% des anionischen Dispergators
   e) 0,1 bis 1,0 Gew.-% Antischaummittel, und/oder
      0,2 bis 0,3 Gew.-% Konservierungsmittel, und/oder
      0,1 bis 1,0 Gew.-% Verdicker, und/oder
      10 bis 35 Gew.-% Gefrierschutzmittel, sowie
      f) Wasser.

Die Herstellung der erfindungsgemässen wässrigen Farbstoffpräparate erfolgt beispielsweise derart, dass man den in Wasser unlöslichen bis schwerlöslichen Farbstoff in Wasser unter Zusatz der anionaktiven Verbindung gemäss der Komponente b) und gegebenenfalls zusätzlich des anionischen Dispergators der Komponente d) bis zu einer Teilchengrösse kleiner als 10 » vermahlt, wobei man die restlichen Komponenten vor, während oder nach dem Mahlprozess zugibt.

Zur Nassmahlung kann man die üblichen Kolloidmühlen, Schwing- und Kugelmühlen, Stiftmühlen, Vibromühlen, Dissolver und Sub-Mikron-Disperser als Hochleistungsdispergiergeräte verwenden. Vorzugsweise werden jedoch Mikrosolmühlen oder kontinuierliche Rührwerkmühlen mit Mahlkörpern, vorzugsweise solche aus SiO₂ von 0,2-5 mm Durchmesser, sogenannte Glasperlenmühlen oder Sandmühlen verwendet. Die Dispersion wird so weit gemahlen, bis die Korngrösse der Farbstoffteilchen kleiner als 10 », insbesondere Kleiner als 2 » ist. Anschliessend wird die Dispersion vom Mahlhilfsmittel abgetrennt.

Verwendung finden die erfindungsgemässen wässrigen Farbstoffpräparate vor allem zur Herstellung von Färbeflotten oder Druckpasten zum Färben oder Bedrucken von synthetischen Textilmaterialien sowie zum Bedrucken von Trägermaterialien für den Transferdruck.

Die bevorzugte Verwendung erfolgt jedoch zum Bedrucken von synthetischen Textilmaterialien, besonders von Polyestermaterialien in Gegenwart synthetischer Verdicker. Bei den synthetischen Verdickem handelt es sich in erster Linie um hochmolekulare Polyacrylsäuren, insbesondere um solche mit einem Molgewicht von 1 bis 10·10⁶, vorzugsweise 3 bis 10·10⁶ und insbesondere 3 bis 6·10⁶. Es handelt sich dabei besonders um Polyacrylsäure, vernetzt mit Divinylbenzol (Mol-Gewicht ca. 4·10⁶). Als weitere synthetische Verdicker kommen noch in Frage hochmolekulare, copolymere Aethylen-Maleinsäuren oder Styrol-Acrylsäuren.

Das Bedrucken von synthetischen Textilmaterialien kann aber auch in Gegenwart von natürlichen Verdickern z.B. Kernmehlderivaten oder Alginaten oder mit einer Halbemulsionsverdickung (z.B. Alginat-Benzin-Emulsion) erfolgen. Ebenso sind Druckpasten geeignet, die eine Mischung von synthetischen und natürlichen Verdickem enthalten.

Desweiteren sind die erfindungsgemässen Farbstoffpräparate geeignet zum Färben von synthetischen Textilmaterialien, vor allem Polyester in verschiedenen kontinuierlichen Färbeverfahren wie z.B. Pad-Themosol von Polyestermaterialien oder in allen ein- und zweibadigen Färbeverfahren von Polyester/Cellulose-Fasern sowie im HT-Ausziehverfahren von Polyester oder Polyester/Cellulose-Fasern unter Zusatz von anionaktiven Dispergatoren wie Ligninsulfonate, Kondensationsprodukte aus Phenolen, Naphtholsulfonsäuren, Natriumsulfit und Formaldehyd.

Eine weitere Verwendung der erfindungsgemässen Farbstoffpräparate ist im Transferdruck gegeben, wenn man für den Transferdruck geeignete Dispersionsfarbstoffe verwendet.

Der Transferdruck wird in der üblichen Weise mittels einer Transferpresse durchgeführt. Hierzu wird der bedruckte Zwischenträger mit dem zu bedruckenden Substrat in Kontakt gebracht und solange auf etwa 150 bis 220°C gehalten, bis die auf dem Zwischenträger aufgebrachten Farbstoffe auf das Substrat übertragen sind; dazu genügen in der Regel 5 bis 60 Sekunden. Das bedruckte Material wird vom Zwischenträger getrennt, eine Nachbehandlung ist im allgemeinen nicht erforderlich. Als Zwischenträger kommen in erster Linie die bekannten, für den Transferdruck geeigneten Papiere mit einem Gewicht von 60 bis 80 g/m², daneben aber auch beispielsweise Cellophan oder Metallfolien in Betracht. Geeignete Transferdrucksubstrate sind vor allem textile Materialien, insbesondere flächenförmige Gebilde wie Vliese, Filze, Teppiche und insbesondere Gewebe und Gewirke aus synthetischen Fasern, vor allem aus Polyesterfasermaterialien. Natürlich kann der Transferdruck unter Verwendung geeigneter Zwischenträger auch zum Bedrucken oder Dekorieren anderer Materialien, wie z.B. entsprechend vorbehandelter Blechdosen verwendet werden.

Bei all diesen Verwendungsmöglichkeiten werden stippenfreie Färbungen und Drucke erhalten mit guten Gesamtechtheiten.

Die folgenden Beispiele veranschaulichen die Erfindung. Temperaturen sind in Grad Celsius angegeben, Teile und Prozente bedeuten Gewichtsteile bzw. Gewichtsprozente.

Die einzelnen Tests wurden wie folgt durchgeführt:

### Lagerstabilitätstest:

Das flüssige Farbstoffpräparat wird in einer geschlossenen Flasche 14 Tage bei +40°C oder +50°C bzw. -10°C gelagert. Danach werden 3 g vom Präparat mit 200 ml entsalztem Wasser 2 Minuten auf dem Magnetrührer bei 750 UpM gerührt, durch ein Rundfilter SS 1450 CV filtriert und mit 50 ml entsalztem Wasser gespült. Bei guter Lagerstabilität darf kein Filterrückstand auf dem Papier sein.

### Redispergierbarkeitstest:

1,5 g des flüssigen Farbstoffpräparates werden in einem 400 ml-Becherglas in Form einer dünnen Schicht auf dem Boden des Becherglases eingetragen und bei Zimmertemperatur 1, 3 und 7 Tage offen gelagert. Der angetrocknete Rückstand wird dann mit 100 ml entsalztem Wasser verdünnt, 2 Minuten auf dem Magnetrührer bei 750 UpM gerührt, durch den Rundfilter SS 1450 CV ⌀ 7 cm filtriert und mit 50 ml entsalztem Wasser gespült. Bei guter Redispergierbarkeit darf kein oder nur wenig Filterrückstand auf dem Papierfilter sein.

Eine schlechte Redispergierbarkeit, die zum stippenhaltigem Druck führt, werden solche Präparate aufweisen, die schon nach 1 Tag des Redispergierbarkeitstests eine Ausfallung der Dispersion verursachen. Werden dagegen Farbstoff-Präparate erhalten, die nach z.B. 7 Tagen des Redispergierbarkeitstests ohne Ausfällung gut redispergierbar sind, weisen solche Präparate in der Applikation sehr gute, stippenfreie Drucke auf.

Beispiel 1: 55 Teile des getrockneten Dispersionsfarbstoffes Disperse Yellow 88 werden langsam unter intensivem Rühren in eine Lösung von
- 12 Teilen einer 75%-igen wässrigen Lösung einer anionischen Verbindung 4-Nonylphenol, äthoxyliert mit 35 Mol Aethylenoxyd, Sulfat-Na-Salz
- 12 Teilen Betain-Monohydrat,
- 0,6 Teilen Hydroxymethyl-Chloracetamid,
- 0,8 Teilen der Aethylenglykol-Lösung von 2,4,7,9-Tetramethyl-5-decyn-4,7-diol,
- 60 Teilen der 70%-igen Lösung von Sorbitol und
- 59,6 Teilen Wasser
eingetragen und ca. 20 Minuten bei Raumtemperatur homogenisiert.

Die erhaltene Farbstoffsuspension wird dann in einer offenen Mühle mittels 200 Teilen Siliquarzitkugeln (⌀ 2 mm) während 7 Stunden gemahlen, bis die durchschnittlihe Teilchengrösse des Farbstoffes ca. 1 » ist. Nach der Abtrennung der Mahlkugeln erhält man ein flüssiges Farbstoffpräparat, das eine sehr gute Lagerstabilität über 1 Monat bei -10°C, +40°C und +50°C aufweist, auch nach 7 Tagen sehr gut redispergierbar ist und bei der Verwendung dieses Präparates im Druck auf PES-Material mit synthetischem Verdicker auf Basis von hochmolekularer Polyacrylsäure nach der Fixierung des Druckes im HT-Dämpfer für 8 Minuten bei 180°C und nach dem Auswaschen des Druckes einen egalen Druck ohne Stippen mit guten allgemeinen Echtheiten ergibt.

Wird anstelle von 4-Nonylphenol äthoxyliert mit 35 Mol Aethylenoxyd Sulfat-Na Salz ein entsprechendes, aber nichtionogenes Produkt 4-Nonylphenol äthoxyliert mit 35 Mol Aethylenoxyd in der Formulierung verwendet, erhält man ein Präparat, das schon nach 1 Tag eine sehr schlechte Redispergierbarkeit aufweist und nach 1 Monat der Lagerung bei +40°C und der gleichen Applikation im Druck auf Polyester einen stippenhaltigen Druck ergibt.

Beispiel 2: 59 Teile des getrockneten Dispersionsfarbstoffes der Formel 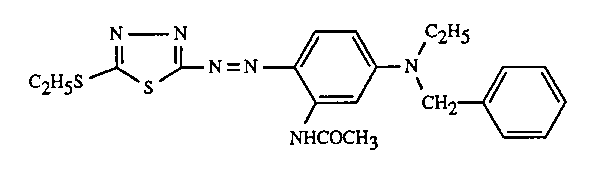
werden langsam unter intensivem Rühren in eine Lösung von
- 34,3 Teilen einer 34%-igen wässrigen Lösung von Isooktylphenol äthoxyliert mit 25 Mol Aethylenoxyd Sulfat-Na-Salz,
- 14 Teilen Betain-Monohydrat,
- 15 Teilen der 33%-igen wässrigen Lösung des Biphenylmethyl-naphthalin-Sulfonsäure-Kondensationsproduktes (hergestellt gemäss Beispiel 3 der DOS 2.352'691 und gereinigt und entsalzt auf 0,5 % Na₂SO₄ im getrockneten Produkt durch Umkehr-Osmose auf einer Anlage, die in der DOS 3.035'135, Beispiel 1 beschriebenen modifizierte Polyacrylnitrilmembrane-Trenngrenze bei einem Molekulargewicht von etwa 500),
- 0,8 Teilen der Aethylenglykol-Lösung von 2,4,7,9-Tetramethyl-5-decyn-4,7-diol,
- 0,6 Teilen Chloracetamid,
- 65 Teilen der 70%-igen Lösung von Sorbitol und
- 11,3 Teilen Wasser
eingetragen und ca. 20 Minuten bei Raumtemperatur homogenisiert.

Die erhaltene Farbstoffsuspension wird dann in einer offenen Mühle mittels 200 Teilen Siliquarzitkugeln (⌀ 2 mm) während 24 Stunden gemahlen, bis die durchschnittliche Teilchengrösse des Farbstoffes ca. 1 » ist. Nach der Abtrennung der Mahlkugeln erhält man ein flüssiges Präparat, das eine gute Lagerstabilität über 2 Monaten bei - 10°C, +40°C und +50°C aufweist und in dem 7 Tage Redispergierbarkeits-Test sehr gut redispergierbar ist.

Wird dieses Präparat in gleicher Applikation wie in Beispiel 1 beschrieben verwendet, erhält man einen egalen Druck auf PES-Material mit guten allgemeinen Echtheiten.

Beispiel 3: 64,4 Teile des getrockneten Dispersionsfarbstoffes der Formel 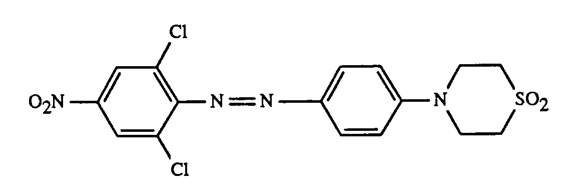
werden langsam unter Rühren in eine Lösung von
- 30 Teilen der 30%-igen wässrigen Lösung von Talgfettalkohol äthoxyliert mit 32 Mol Aethylenoxyd Sulfat-Na Salz,
- 12 Teilen Betain-Monohydrat,
- 1 Teil der Aethylenglykol-Lösung von 2,4,7,9-Tetramethyl-5-decyn-4,7-diol,
- 0,6 Teilen Hydroxymethyl-Chloracetamid,
- 60 Teilen der 70%-igen Lösung von Sorbitol und
- 32 Teilen Wasser
eingetragen und 20 Minuten bei Raumtemperatur homogenisiert.

Die erhaltene Farbstoffsuspension wird dann in einer offenen Mühle mittels 200 Teilen Siliquarzitkugeln (⌀ 2 mm) während 7 Stunden gemahlen, bis die durchschnittliche Teilchengrösse des Farbstoffes ca. 1 » ist. Nach der Abtrennung der Mahlkugeln erhält man ein flüssiges Farbstoffpräparat, das eine gute Lagerstabilität über 1 Monat bei - 10°C, +40°C und +50°C aufweist und sehr gut redispergierbar (7 Tage-Test) ist.

Bei der Verwendung dieses Präparates im Druck auf PES-Material mit natürlichem Verdicker auf Basis von Alginat, nach der Fixierung des Druckes im HT-Dämpfer für 8 Minuten bei 175°C und nach dem Auswaschen des Druckes wird ein egaler Druck ohne Stippen und guten Echtheiten erhalten.

Wird anstelle von Talgfettalkohol äthoxyliert mit 32 Mol Aethylenoxyd Sulfat-Na Salz eine gleiche Menge von Talgfettalkohol äthoxyliert mit 60 bzw. 77 Mol Aethylenoxyd Sulfat-Na Salz im Präparat verwendet, so werden gleich gute Eigenschaften wie Lagerstabilität, Redispergierbarkeit und applikatorisches Verhalten erreicht.

Wird anstelle von Talgfettalkohol äthoxyliert mit 32 Mol Aethylenoxyd Sulfat-Na Salz ein nicht sulfaminiertes Produkt wie Stearylalkohol äthoxyliert mit 30 Mol Aethylenoxyd Addukt verwendet, resultiert ein Präparat, das schon nach 1 Tag des Redispergierbarkeits-Tests eine starke Ausfallung (Agglomeration) verursacht und nach der Lagerung von 1 Monat bei +40°C und der gleichen Applikation das Präparat einen stippenhaltigen Druck ergibt.

Beispiel 4: 98,1 Teile feuchter Presskuchen des Dispersionsfarbstoffes gemäss Beispiel 1 der DE-A-2 850 482 werden unter Rühren in eine Lösung von
- 32,0 Teilen einer 34%-igen wässrigen Lösung von Isooctylphenol äthoxyliert mit 25 Mol Aethylenoxyd, Sulfat-Na-Salz
- 14 Teilen Betain-Monohydrat,
- 0,8 Teilen der Aethylenglykol-Lösung von 2,4,7,9-Tetramethyl-5-decyn-4,7-diol,
- 0,6 Teilen Hydroxymethyl-Chloracetamid,
- 46 Teilen Glyzerin und
- 8,5 Teilen Wasser
eingetragen und ca. 20 Minuten bei Raumtemperatur homogenisiert.

Die erhaltene Farbstoffsuspension wird dann in einer offenen Mühle mittels 200 Teilen Siliquarzitkugeln (⌀ 2 mm) während 8 Stunden gemahlen bis die durchschnittliche Teilchengrösse des Farbstoffes ca. 1 » ist. Nach der Abtrennung der Mahlkugeln erhält man ein flüssiges Präparat, das eine gute Lagerstabilität über 1 Monat bei - 10°C, +40°C und +50°C aufweist und auch noch nach 7 Tagen sehr gut dispergierbar ist.

Bei der Verwendung dieses Präparates im Druck mit synthetischer Verdickung auf Basis von hochmolekularer Polyacrylsäure auf dem Transfer-Druck-Papier und nach dem Transferdruck von bedrucktem Papier auf ein PES-Gewebe während 30 Sekunden bei 210°C in einer Transferdruckpresse erhält man einen egalen, stippenfreien blauen Druck mit guten Echtheiten.

Beispiel 5: 65,8 Teile des getrockneten Dispersionsfarbstoffes gemäss der EP-A-79 862, Beispiel 6 werden langsam unter intensivem Rühren in eine Lösung von
- 12,0 Teilen einer 75%-igen wässrigen Lösung von 4-Nonylphenol äthoxyliert mit 35 Mol Aethylenoxyd Sulfat-Na Salz,
- 12 Teilen Betain-Monohydrat,
- 0,6 Teilen der 50%-igen Aethylenglykol-Lösung von 2,4,7,9-Tetramethyl-5-decyn-4,7-diol,
- 0,6 Teilen Chloracetamid,
- 40 Teilen Glyzerin und
- 69 Teilen Wasser
eingetragen und ca. 20 Minuten bei Raumtemperatur homogenisiert.

Die erhaltene Farbstoffsuspension wird dann in einer offenen Mühle mittels 200 Teilen Siliquarzitkugeln (⌀ 2 mm) während 20 Stunden gemahlen, bis die durchschnittliche Teilchengrösse des Farbstoffes ca. 1 » ist. Nach der Abtrennung der Mahikugeln erhält man ein flüssiges Farbstoffpräparat, das eine gute Lagerstabilität über 1 Monat bei -10°C, +40°C und +50°C aufweist und sehr gut - auch noch nach 7 Tagen - redispergierbar ist.

Wird dieses Präparat in gleicher Applikation wie in Beispiel 3 beschrieben verwendet, erhält man einen egalen, stippenfreien Druck auf PES, Material mit guten Echtheiten.

Beispiel 6: 57,6 Teile des getrockneten Dispersionsfarbstoffes C.I. Disperse Orange 80 werden langsam unter intensivem Rühren in eine Lösung von:
30 Teilen einer 34%-igen wässrigen Lösung von Isooktylphenol äthoxyliert mit 25 Mol Aethylenoxyd, Sulfat-Na Salz,
20 Teilen Betain-Monohydrat,
8 Teilen des Bisphenylmethyl-naphthalin-Sulfonsäure-Kondensationsproduktes in gleicher Qualität wie in Beispiel 2,
0,6 Teilen Hydroxymethyl-Chloracetamid,
0,8 Teilen der Aethylenglykol-Lösung von 2,4,7,9-Tetramethyl-5-decyn-4,7-diol,
30 Teilen Glyzerin und
53 Teilen Wasser
eingetragen und ca. 20 Minuten Raumtemperatur homogenisiert.

Die erhaltene Farbstoffsuspension wird dann in einer offenen Mühle mittels 200 Teilen Siliquarzitkugeln (⌀ 2 mm) während 11 Stunden gemahlen, bis die durchschnittliche Teilchengrösse des Farbstoffes ca. 1 » ist. Nach der Abtrennung der Mahlkugeln erhält man ein flüssiges Präparat, das eine gute Lagerstabilität über 1 Monat bei -10°C, +40°C und +50°C aufweist und in dem 7 Tagen Redispergierbarkeits-Test sehr gut redispergierbar ist.

Wird dieses Präparat in gleicher Applikation wie in Beispiel 1 beschrieben verwendet, erhält man einen egalen Druck auf PES-Material mit guten allgemeinen Echtheiten.

Beispiel 7: 96,5 Teile feuchter Presskuchen des Dispersionsfarbstoffes C.I. Disperse Blue 361, werden unter Rühren in eine Lösung von:
30 Teilen einer 34%-igen wässrigen Lösung von Isooktylphenol äthoxyliert mit 25 Mol Aethylenoxyd, Sulfat-Na Salz,
12 Teilen Betain-Monohydrat,
0,8 Teilen der Aethylenglykol-Lösung von 2,4,7,9-Tetramethyl-5-decyn-4,7-diol,
0,6 Teilen Hydroxymethyl-Chloracetamid,
40 Teilen Glyzerin,
0,6 Teilen Na-Polystyrolsulfonat (M.G. ca. 500'000)-Verdicker und
19,5 Teilen Wasser
eingetragen und ca. 20 Minuten Raumtemperatur homogenisiert.

Die erhaltene Farbstoffsuspension wird dann in einer offenen Mühle mittels 200 Teilen Siliquarzitkugeln (⌀ 2 mm) während 15 Stunden gemahlen, bis die durchschnittliche Teilchengrösse des Farbstoffes ca. 1 » ist. Nach der Abtrennung der Mahlkugeln erhält man ein flüssiges Präparat, das eine gute Lagerstabilität über 1 Monat bei -10°C, +40°C und +50°C aufweist und noch nach 7 Tagen sehr gut redispergierbar ist.

Wird dieses Präparat in gleicher Applikation wie in Beispiel 1 beschrieben verwendet, erhält man einen egalen Druck auf PES-Material mit guten allgemeinen Echtheiten.

## Patentansprüche (Patentansprüche für folgende(n) Vertragsstaat(en): CH, DE, FR, GB, IT, LI)

1. Wässrige Farbstoffpräparate, dadurch gekennzeichnet, dass sie enthalten:
a) mindestens einen Dispersionsfarbstoff in einer Menge von 15 bis 45 Gew.-% bezogen auf das Farbstoffpräparat
b) ein mit mindestens 20 Mol Aethylenoxyd äthoxyliertes, sulfatiertes Alkylphenoles mit 2 bis 12 Kohlenstoffatomen im Alkylrest oder einen mit mindestens 20 Mol Aethylenoxyd äthoxylierter, sulfatierter Fettalkohol in einer Menge von 1 bis 10 Gew.-% bezogen auf das Farbstoffpräparat
c) gegebenenfalls Betain-Monohydrat,
d) gegebenenfalls einen anionischen Dispergator der allgemeinen Formel I 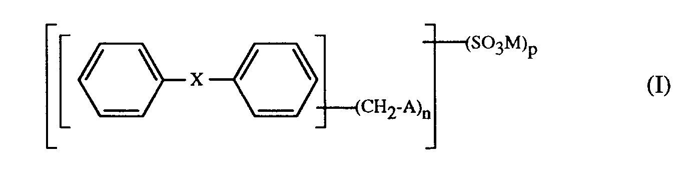 worin
X die direkte Bindung oder Sauerstoff,
A Wasserstoff oder den Rest einer aromatischen Verbindung, welcher mittels eines Ringkohlenstoffatoms an die Methylengruppe gebunden ist,
n und p unabhängig voneinander je eine Zahl von 1 bis 4, und
M ein einwertiges Kation, bedeuten, und gegebenenfalls Kondensate dieser Verbindungen mit Formaldehyd sowie
e) gegebenenfalls weitere Hilfsmittel, und
f) Wasser.

2. Wässrige Farbstoffpräparate gemäss Anspruch 1, dadurch gekennzeichnet, dass der in Wasser unlösliche bis schwerlösliche Dispersionsfarbstoff in einer Menge von 25 bis 35 Gew.-% bezogen auf das Farbstoffpräparat vorliegt.

3. Wässrige Farbstoffpräparate gemäss Anspruch 1, dadurch gekennzeichnet, dass die äthoxylierte Komponente b) in einer Menge von 4 bis 6 Gew.-% bezogen auf das Farbstoffpräparat vorliegt.

4. Wässrige Farbstoffpräparate gemäss der Ansprüche 1 bis 3, dadurch gekennzeichnet, dass die Komponente b) ein sulfatiertes 4-Nonylphenol äthoxyliert mit 35 Mol Aethylenoxyd oder ein sulfatiertes Isooctylphenol äthoxyliert mit 25 Mol Aethylenoxyd ist.

5. Wässrige Farbstoffpräparate gemäss der Ansprüche 1 bis 3, dadurch gekennzeichnet, dass die Komponente b) ein sulfatierter Talgfettalkohol äthoxyliert mit 32 oder 60 oder 77 Mol Aethylenoxyd ist.

6. Wässrige Farbstoffpräparate gemäss der Ansprüche 1 bis 5, dadurch gekennzeichnet, dass die Komponente c), das Betain-Monohydrat zu 0 bis 10 Gew.-% bezogen auf das Farbstoffpräparat vorliegt.

7. Wässrige Farbstoffpräparate gemäss Anspruch 6, dadurch gekennzeichnet, dass die Komponente c), das Betain-Monohydrat zu 3 bis 8 Gew.-% bezogen auf das Farbstoffpräparat vorliegt.

8. Wässrige Farbstoffpräparate gemäss der Ansprüche 1 bis 7, dadurch gekennzeichnet, dass der anionische Dispergator gemäss der Komponente d) der allgemeinen Formel (IA) 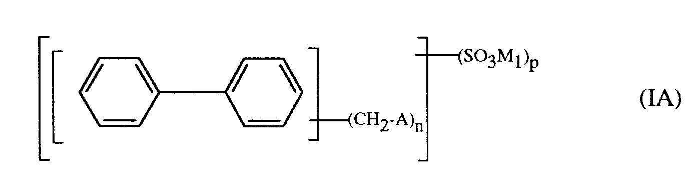 entspricht, worin
A den Rest einer aromatischen Verbindung, welcher mittels eines Ringkohlenstoffatoms an die Methylengruppe gebunden ist,
M₁ Natrium, Kalium, Lithium, Triäthanolamin oder Triisopropanolamin und n und p unabhängig voneinander je eine Zahl von 1 bis 4 bedeuten.

9. Wässrige Farbstoffpräparate gemäss Anspruch 8, dadurch gekennzeichnet, dass der anionische Dispergator gemäss der Komponente d) der allgemeinen Formel (IB) 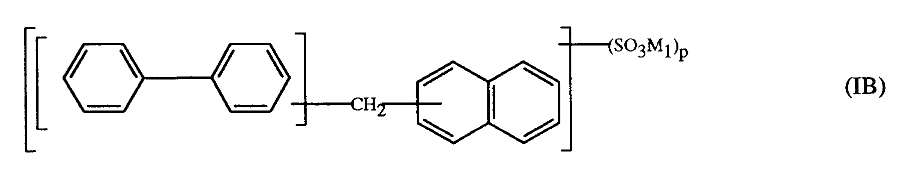 entspricht, worin
M₁ Natrium, Kalium, Lithium, Triäthanolamin oder Triisopropanolamin, bedeutet.

10. Wässrige Farbstoffpräparate gemäss der Ansprüche 1 bis 9, dadurch gekennzeichnet, dass der anionische Dispergator gemäss der Komponente d) in einer Menge von 0 bis 4 Gew.-% bezogen auf das Farbstoffpräparat vorliegt.

11. Wässrige Farbstoffpräparate gemäss Anspruch 10, dadurch gekennzeichnet, dass der anionische Dispergator gemäss der Komponente d) in einer Menge von 1 bis 2 Gew.-% bezogen auf das Farbstoffpräparat vorliegt.

12. Wässrige Farbstoffpräparate gemäss der Ansprüche 1 bis 11, dadurch gekennzeichnet, dass der anionische Dispergator gemäss der Komponente d) ein Verhältnis von Kohlenstoff zu organisch gebundenem Schwefel von >15:1 aufweist und die Elektrolytmenge im trockenen Dispergator, als Na₂SO₄ ausgedrückt, unter 1 Gew.-% beträgt.

13. Wässrige Farbstoffpräparate gemäss der Ansprüche 1 bis 12, dadurch gekennzeichnet, dass als weitere Hilfsmittel gemäss der Komponente e) Antischaummittel, Konservierungsmittel Verdicker und/oder Gefrierschutzmittel vorhanden sind.

14. Wässrige Farbstoffpräparate gemäss Anspruch 1, dadurch gekennzeichnet, dass sie enthalten:
a) mindestens einen Dispersionsfarbstoff in einer Menge von 15 bis 45 Gew.-% bezogen auf das Farbstoffpräparat,
b) 4-Nonylphenol äthoxyliert mit 35 Mol Aethylenoxyd, sulfatiert, oder Isooctylphenol äthoxyliert mit 25 Mol Aethylenoxyd sulfatiert, in einer Menge von 1 bis 10 Gew.-%, bezogen auf das Farbstoffpräparat
c) 0 bis 10 Gew.-% Betain-Monohydrat,
d) 0 bis 4 Gew.-% des anionischen Dispergators der allgemeinen Formel (IB) 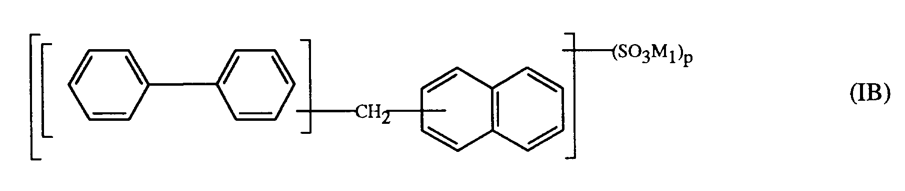 worin
M₁ Natrium, Kalium, Lithium, Triäthanolamin oder Triisopropanolamin, und
p eine Zahl von 1 bis 4 bedeuten,
e) 0,1 bis 1,0 Gew.-% Antischaummittel, und/oder
0,2 bis 0,3 Gew.-% Konservierungsmittel, und/oder
0,1 bis 1,0 Gew.-% Verdicker, und/oder
10 bis 35 Gew.-% Gefrierschutzmittel, sowie
f) Wasser.

15. Wässrige Farbstoffpräparate gemäss Anspruch 1, dadurch gekennzeichnet, dass sie enthalten:
a) mindestens einen Dispersionsfarbstoff in einer Menge von 15 bis 45 Gew.-% bezogen auf das Farbstoffpräparat,
b) Talgfettalkohol äthoxyliert mit 32 oder 60 oder 77 Mol Aethylenoxyd sulfatiert, in einer Menge von 1 bis 10 Gew.-%, bezogen auf das Farbstoffpräparat
c) 0 bis 10 Gew.-% Betain-Monohydrat,
d) 0 Gew.-% des anionischen Dispergators
e) 0,1 bis 1,0 Gew.-% Antischaummittel, und/oder
0,2 bis 0,3 Gew.-% Konservierungsmittel, und/oder
0,1 bis 1,0 Gew.-% Verdicker, und/oder
10 bis 35 Gew.-% Gefrierschutzmittel, sowie
f) Wasser.

16. Verfahren zur Herstellung der wässrigen Farbstoffpräparate gemäss den Ansprüchen 1 bis 15, dadurch gekennzeichnet, dass man den in Wasser unlöslichen bis schwerlöslichen Farbstoff in Wasser unter Zusatz der anionaktiven Verbindung gemäss der Komponente b) und gegebenenfalls zusätzlich des anionischen Dispergators der Komponente d) bis zu einer Teilchengrösse Kleiner als 10 » vermahlt, wobei man die restlichen Komponenten vor, während oder nach dem Mahlprozess zugibt.

17. Verwendung der wässrigen Farbstoffpräparate gemäss den Ansprüchen 1 bis 15 zur Herstellung von Färbeflotten oder Druckpasten zum Färben oder Bedrucken von synthetischen Textilmaterialien.

18. Verwendung der wässrigen Farbstoffpräparate gemäss den Ansprüchen 1 bis 15 zum Bedrucken von Trägermaterialien für den Transferdruck.

19. Verwendung gemäss Anspruch 18 zum Bedrucken von Papier als Trägermaterial.

## Patentansprüche (Patentansprüche für folgende(n) Vertragsstaat(en): ES)

1. Verfahren zur Herstellung von wässrigen Farbstoffpräparaten, dadurch gekennzeichnet, dass man:
a) mindestens einen Dispersionsfarbstoff in einer Menge von 15 bis 45 Gew.-% bezogen auf das Farbstoffpräparat
b) ein mit mindestens 20 Mol Aethylenoxyd äthoxyliertes, sulfatiertes Alkylphenoles mit 2 bis 12 Kohlenstoffatomen im Alkylrest oder einen mit mindestens 20 Mol Aethylenoxyd äthoxylierter, sulfatierter Fettalkohol in einer Menge von 1 bis 10 Gew.-% bezogen auf das Farbstoffpräparat
c) gegebenenfalls Betain-Monohydrat,
d) gegebenenfalls einen anionischen Dispergator der allgemeinen Formel I 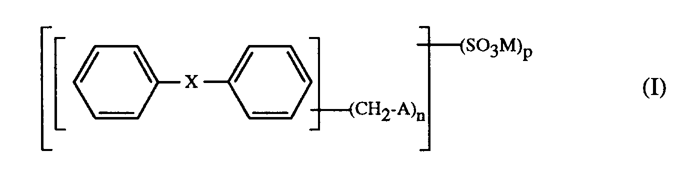 worin
X die direkte Bindung oder Sauerstoff,
A Wasserstoff oder den Rest einer aromatischen Verbindung, welcher mittels eines Ringkohlenstoffatoms an die Methylengruppe gebunden ist,
n und p unabhängig voneinander je eine Zahl von 1 bis 4, und
M ein einwertiges Kation, bedeuten, und gegebenenfalls Kondensate dieser Verbindungen mit Formaldehyd sowie
e) gegebenenfalls weitere Hilfsmittel, und
f) Wasser
zusammenmischt.

2. Verfahren gemäss Anspruch 1, dadurch gekennzeichnet, dass der in Wasser unlösliche bis schwerlösliche Dispersionsfarbstoff in einer Menge von 25 bis 35 Gew.-% bezogen auf das Farbstoffpräparat vorliegt.

3. Verfahren gemäss Anspruch 1, dadurch gekennzeichnet, dass die äthoxylierte Komponente b) in einer Menge von 4 bis 6 Gew.-% bezogen auf das Farbstoffpräparat vorliegt.

4. Verfahren gemäss der Ansprüche 1 bis 3, dadurch gekennzeichnet, dass die Komponente b) ein sulfatiertes 4-Nonylphenol äthoxyliert mit 35 Mol Aethylenoxyd oder ein sulfatiertes Isooctylphenol äthoxyliert mit 25 Mol Aethylenoxyd ist.

5. Verfahren gemäss der Ansprüche 1 bis 3, dadurch gekennzeichnet, dass die Komponente b) ein sulfatierter Talgfettalkohol äthoxyliert mit 32 oder 60 oder 77 Mol Aethylenoxyd ist.

6. Verfahren gemäss der Ansprüche 1 bis 5, dadurch gekennzeichnet, dass die Komponente c), das Betain-Monohydrat zu 0 bis 10 Gew.-% bezogen auf das Farbstoffpräparat vorliegt.

7. Verfahren gemäss Anspruch 6, dadurch gekennzeichnet, dass die Komponente c), das Betain-Monohydrat zu 3 bis 8 Gew.-% bezogen auf das Farbstoffpräparat vorliegt.

8. Verfahren gemäss der Ansprüche 1 bis 7, dadurch gekennzeichnet, dass der anionische Dispergator gemäss der Komponente d) der allgemeinen Formel (IA) 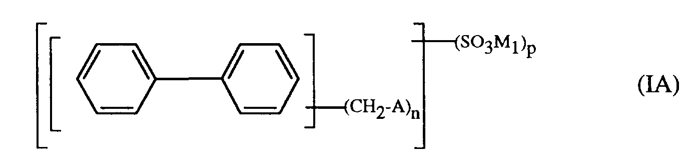 entspricht, worin
A den Rest einer aromatischen Verbindung, welcher mittels eines Ringkohlenstoffatoms an die Methylengruppe gebunden ist,
M₁ Natrium, Kalium, Lithium, Triäthanolamin oder Triisopropanolamin und n und p unabhängig voneinander je eine Zahl von 1 bis 4 bedeuten.

9. Verfahren gemäss Anspruch 8, dadurch gekennzeichnet, dass der anionische Dispergator gemäss der Komponente d) der allgemeinen Formel (IB) 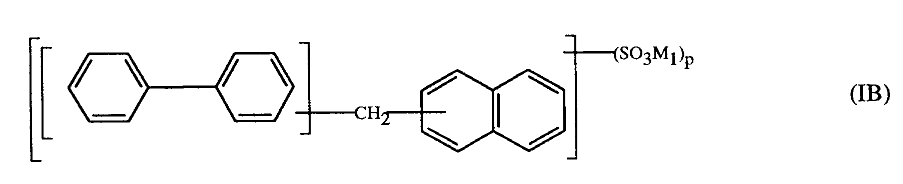 entspricht, worin
M₁ Natrium, Kalium, Lithium, Triäthanolamin oder Triisopropanolamin, bedeutet.

10. Verfahren gemäss der Ansprüche 1 bis 9, dadurch gekennzeichnet, dass der anionische Dispergator gemäss der Komponente d) in einer Menge von 0 bis 4 Gew.-% bezogen auf das Farbstoffpräparat vorliegt.

11. Verfahren gemäss Anspruch 10, dadurch gekennzeichnet, dass der anionische Dispergator gemäss der Komponente d) in einer Menge von 1 bis 2 Gew.-% bezogen auf das Farbstoffpräparat vorliegt.

12. Verfahren gemäss der Ansprüche 1 bis 11, dadurch gekennzeichnet, dass der anionische Dispergator gemäss der Komponente d) ein Verhältnis von Kohlenstoff zu organisch gebundenem Schwefel von >15:1 aufweist und die Elektrolytmenge im trockenen Dispergator, als Na₂SO₄ ausgedrückt, unter 1 Gew.-% beträgt.

13. Verfahren gemäss der Ansprüche 1 bis 12, dadurch gekennzeichnet, dass als weitere Hilfsmittel gemäss der Komponente e) Antischaummittel, Konservierungsmittel Verdicker und/oder Gefrierschutzmittel vorhanden sind.

14. Verfahren gemäss Anspruch 1, dadurch gekennzeichnet, dass die wässrigen Farbstoffpräparate
a) mindestens einen Dispersionsfarbstoff in einer Menge von 15 bis 45 Gew.-% bezogen auf das Farbstoffpräparat,
b) 4-Nonylphenol äthoxyliert mit 35 Mol Aethylenoxyd, sulfatiert, oder Isooctylphenol äthoxyliert mit 25 Mol Aethylenoxyd sulfatiert, in einer Menge von 1 bis 10 Gew.-%, bezogen auf das Farbstoffpräparat
c) 0 bis 10 Gew.-% Betain-Monohydrat,
d) 0 bis 4 Gew.-% des anionischen Dispergators der allgemeinen Formel (IB) 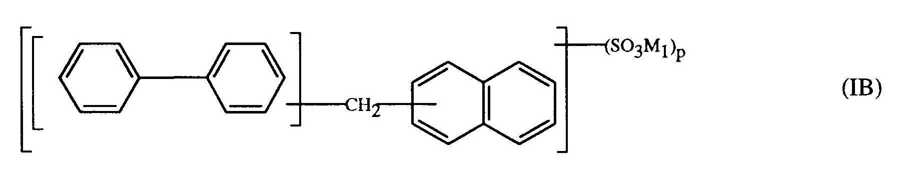 worin
M₁ Natrium, Kalium` Lithium, Triäthanolamin oder Triisopropanolamin, und
p eine Zahl von 1 bis 4 bedeuten,
e) 0,1 bis 1,0 Gew.-% Antischaummittel, und/oder
0,2 bis 0,3 Gew.-% Konservierungsmittel, und/oder
0,1 bis 1,0 Gew.-% Verdicker, und/oder
10 bis 35 Gew.-% Gefrierschutzmittel, sowie
f) Wasser
enthalten.

15. Verfahren gemäss Anspruch 1, dadurch gekennzeichnet, dass die wässrigen Farbstoffpräparate
a) mindestens einen Dispersionsfarbstoff in einer Menge von 15 bis 45 Gew.-% bezogen auf das Farbstoffpräparat,
b) Talgfettalkohol äthoxyliert mit 32 oder 60 oder 77 Mol Aethylenoxyd sulfatiert, in einer Menge von 1 bis 10 Gew.-%, bezogen auf das Farbstoffpräparat
c) 0 bis 10 Gew.-% Betain-Monohydrat,
d) 0 Gew.-% des anionischen Dispergators
e) 0,1 bis 1,0 Gew.-% Antischaummittel, und/oder
0,2 bis 0,3 Gew.-% Konservierungsmittel, und/oder
0,1 bis 1,0 Gew.-% Verdicker, und/oder
10 bis 35 Gew.-% Gefrierschutzmittel, sowie
f) Wasser
enthalten.

16. Verfahren zur Herstellung der wässrigen Farbstoffpräparate gemäss den Ansprüchen 1 bis 15, dadurch gekennzeichnet, dass man den in Wasser unlöslichen bis schwerlöslichen Farbstoff in Wasser unter Zusatz der anionaktiven Verbindung gemäss der Komponente b) und gegebenenfalls zusätzlich des anionischen Dispergators der Komponente d) bis zu einer Teilchengrösse Kleiner als 10 » vermahlt, wobei man die restlichen Komponenten vor, während oder nach dem Mahlprozess zugibt.

17. Verwendung der wässrigen Farbstoffpräparate gemäss den Ansprüchen 1 bis 16 zur Herstellung von Farbeflotten oder Druckpasten zum Färben oder Bedrucken von synthetischen Textilmaterialien.

18. Verwendung der wässrigen Farbstoffpräparate gemäss den Ansprüchen 1 bis 16 zum Bedrucken von Trägermaterialien für den Transferdruck.

19. Verwendung gemäss Anspruch 18 zum Bedrucken von Papier als Trägermaterial.

## Claims (Claims for the following Contracting State(s): CH, DE, FR, GB, IT, LI)

1. An aqueous dye formulation which comprises:
a) at least one disperse dye in an amount of 15 to 45 % by weight, based on the dye formulation
b) at least one sulfated alkylphenol containing 2 to 12 carbon atoms in the alkyl radical, ethoxylated with at least 20 mol of ethylene oxide, or a sulfated fatty alcohol ethoxylated with at least 20 mol of ethylene oxide, in an amount of 1 to 10 % by weight, based on the dye formulation
c) if desired a betaine monohydrate,
d) if desired an anionic dispersant of the general formula I 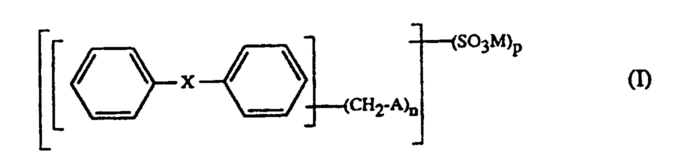 wherein
X is a direct bond or oxygen,
A is hydrogen or the radical of an aromatic compound which is attached through a ring carbon atom to the methylene group,
n and p are each independently of the other a number from 1 to 4, and
M is a monovalent cation, with or without condensates of these compounds with formaldehyde, and
e) if desired further auxiliaries, and
f) water.

2. An aqueous dye formulation according to claim 1, which contains the water-insoluble to sparingly water-soluble dye in an amount of 25 to 35 % by weight, based on the dye formulation.

3. An aqueous dye formulation according to claim 1, which contains the ethoxylated component b) in an amount of 4 to 6 % by weight, based on the dye formulation.

4. An aqueous dye formulation according to claims 1 to 3, wherein component b) is a sulfated 4-nonylphenol ethoxylated with 35 mol of ethylene oxide or a sulfated isooctylphenyl ethoxylated with 25 mol of ethylene oxide.

5. An aqueous dye formulation according to claims 1 to 3, wherein component b) is a sulfated tallow fatty alcohol ethoxylated with 32 or 60 or 77 mol of ethylene oxide.

6. An aqueous dye formulation according to claims 1 to 5, which contains the betaine monohydrate component c) in an amount of 0 to 10 % by weight, based on the dye formulation.

7. An aqueous dye formulation according to claim 6, which contains the betaine monohydrate component c) in an amount of 3 to 8 % by weight, based on the dye formulation.

8. An aqueous dye formulation according to claims 1 to 7, wherein the anionic dispersant component d) has the general formula (IA) 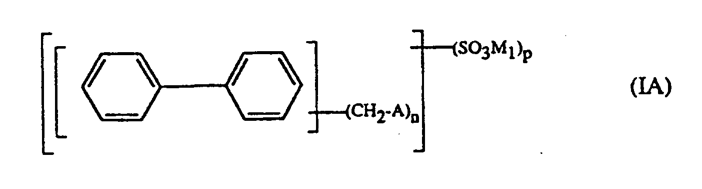 wherein
A is the radical of an aromatic compound which is attached through a ring carbon atom to the methylene group,
M₁ is sodium, potassium, lithium, triethanolamine or triisopropanolamine, and
n and p are each independently of the other a number from 1 to 4.

9. An aqueous dye formulation according to claim 8, wherein the anionic dispersant component d) has the general formula (IB) 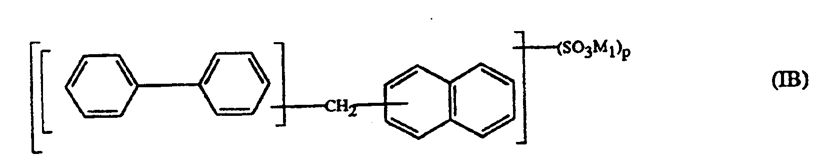 wherein
M₁ is sodium, potassium, lithium, triethanolamine or triisopropanolamine.

10. An aqueous dye formulation according to claims 1 to 9, which contains the anionic dispersant component d) in an amount of 0 to 4 % by weight, based on the dye formulation.

11. An aqueous dye formulation according to claim 10, which contains the anionic dispersant component d) in an amount of 1 to 2 % by weight, based on the dye formulation.

12. An aqueous dye formulation according to claims 1 to 11, wherein the anionic dispersant component d) has a ratio of carbon to organically bonded sulfur of >15:1, and the amount of electrolyte in the dry dispersant, expressed as Na₂SO₄, is less than 1 % by weight.

13. An aqueous dye formulation according to claims 1 to 12, wherein further auxiliaries present as component e) are antifoams, preservatives, thickeners and/or antifreeze agents.

14. An aqueous dye formulation according to claim 1, which comprises:
a) at least one disperse dye in an amount of 15 to 45 % by weight, based on the dye formulation,
b) sulfated 4-nonylphenyl ethoxylated with 35 mol of ethylene oxide or sulfated isooctylphenyl ethoxylated with 25 mol of ethylene oxide, in an amount of 1 to 10 % by weight, based on the dye formulation,
c) 0 to 10 % by weight of betaine monohydrate,
d) 0 to 4 % by weight of the anionic dispersant of the general formula (IB) 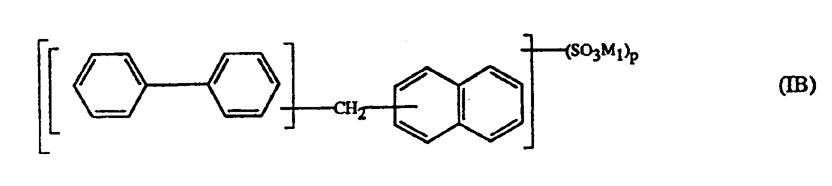 wherein
M₁ is sodium, potassium, lithium, triethanolamine or triisopropanolamine, and
p is a number from 1 to 4,
e) 0.1 to 1.0 % by weight of antifoam, and/or
0.2 to 0.3 % by weight of preservative, and/or
0.1 to 1.0 % by weight of thickener, and/or
10 to 35 % by weight of antifreeze agent, and
f) water.

15. An aqueous dye formulation according to claim 1, which comprises:
a) at least one disperse dye in an amount of 15 to 45 % by weight, based on said dye formulation,
b) sulfated tallow fatty alcohol ethoxylated with 32 or 60 or 77 mol of ethylene oxide, in an amount of 1 to 10 % by weight, based on the dye formulation,
c) 0 to 10 % by weight of betaine monohydrate,
d) 0 % by weight of the anionic dispersant,
e) 0.1 to 1.0 % by weight of antifoam, and/or
0.2 to 0.3 % by weight of preservative, and/or
0.1 to 1.0 % by weight of thickener, and/or
10 to 35 % by weight of antifreeze agent, and
f) water.

16. A process for the preparation of an aqueous dye formulation according to claims 1 to 15, which comprises milling the water-insoluble to sparingly water-soluble dye in water, with the addition of the anionic compound used as component b) and with the further optional addition of the anionic dispersant used as component d), to a particle size of less than 10 », the remaining components being added before, during or after the milling operation.

17. Use of an aqueous dye formulation according to claims 1 to 15 for the preparation of dye liquors or print pastes for dyeing or printing synthetic textile materials.

18. Use of an aqueous dye formulation according to claims 1 to 15 for the printing of support materials for transfer printing.

19. Use according to claim 21 for the printing of paper as support material.

## Claims (Claims for the following Contracting State(s): ES)

1. A process for the preparation of an aqueous dye formulation, which comprises mixing together:
a) at least one disperse dye in an amount of 15 to 45 % by weight, based on the dye formulation
b) at least one sulfated alkylphenol containing 2 to 12 carbon atoms in the alkyl radical, ethoxylated with at least 20 mol of ethylene oxide, or a sulfated fatty alcohol ethoxylated with at least 20 mol of ethylene oxide, in an amount of 1 to 10 % by weight, based on the dye formulation
c) if desired a betaine monohydrate,
d) if desired an anionic dispersant of the general formula I 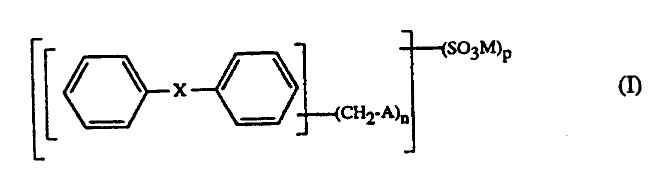 wherein
X is a direct bond or oxygen,
A is hydrogen or the radical of an aromatic compound which is attached through a ring carbon atom to the methylene group,
n and p are each independently of the other a number from 1 to 4, and
M is a monovalent cation, with or without condensates of these compounds with formaldehyde, and
e) if desired further auxiliaries, and
f) water.

2. A process according to claim 1, wherein the water-insoluble to sparingly water-soluble dye is present in an amount of 25 to 35 % by weight, based on the dye formulation.

3. A process according to claim 1, wherein the ethoxylated component b) is present in an amount of 4 to 6 % by weight, based on the dye formulation.

4. A process according to claims 1 to 3, wherein component b) is a sulfated 4-nonylphenol ethoxylated with 35 mol of ethylene oxide or a sulfated isooctylphenol ethoxylated with 25 mol of ethylene oxide.

5. A process according to claims 1 to 3, wherein component b) is a sulfated tallow fatty alcohol ethoxylated with 32 or 60 or 77 mol of ethylene oxide.

6. A process according to claims 1 to 5, wherein the betaine monohydrate component c) is present in an amount of 0 to 10 % by weight, based on the dye formulation.

7. A process according to claim 6, wherein the betaine monohydrate component c) is present in an amount of 3 to 8 % by weight, based on the dye formulation.

8. A process according to claims 1 to 7, wherein the anionic dispersant component d) has the general formula (IA) 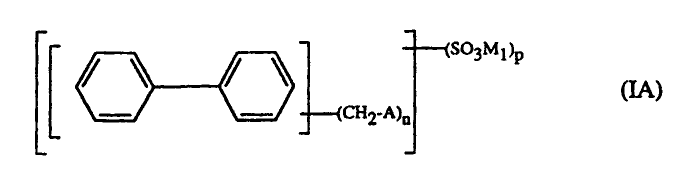 wherein
A is the radical of an aromatic compound which is attached through a ring carbon atom to the methylene group,
M₁ is sodium, potassium, lithium, triethanolamine or triisopropanolamine, and
n and p are each independently of the other a number from 1 to 4.

9. A process according to claim 8, wherein the anionic dispersant component d) has the general formula (IB) 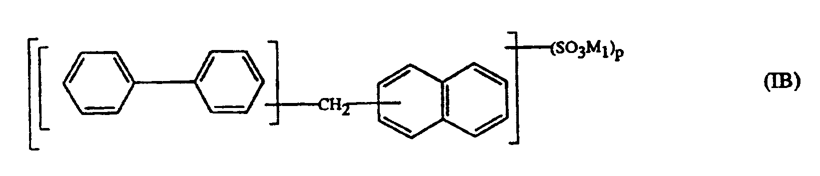 wherein
M₁ is sodium, potassium, lithium, triethanolamine or triisopropanolamine.

10. A process according to claims 1 to 9, wherein the anionic dispersant component d) is present in an amount of 0 to 4 % by weight, based on the dye formulation.

11. A process according to claim 10, wherein the anionic dispersant component d) is present in an amount of 1 to 2 % by weight, based on the dye formulation.

12. A process according to claims 1 to 11, wherein the anionic dispersant component d) has a ratio of carbon to organically bonded sulfur of >15:1, and the amount of electrolyte in the dry dispersant, expressed as Na₂SO₄, is less than 1 % by weight.

13. A process according to claims 1 to 12, wherein further auxiliaries present as component e) are antifoams, preservatives, thickeners and/or antifreeze agents.

14. A process according to claim 1, wherein the aqueous dye formulation comprises
a) at least one disperse dye in an amount of 15 to 45 % by weight, based on the dye formulation,
b) sulfated 4-nonylphenyl ethoxylated with 35 mol of ethylene oxide or sulfated isooctylphenyl ethoxylated with 25 mol of ethylene oxide, in an amount of 1 to 10 % by weight, based on the dye formulation,
c) 0 to 10 % by weight of betaine monohydrate,
d) 0 to 4 % by weight of the anionic dispersant of the general formula (IB) 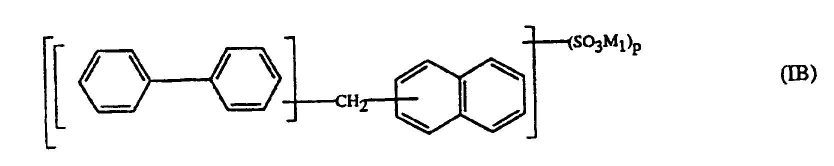 wherein
M₁ is sodium, potassium, lithium, triethanolamine or triisopropanolamine, and
p is a number from 1 to 4,
e) 0.1 to 1.0 % by weight of antifoam, and/or
0.2 to 0.3 % by weight of preservative, and/or
0.1 to 1.0 % by weight of thickener, and/or
10 to 35 % by weight of antifreeze agent, and
f) water.

15. A process according to claim 1, wherein the aqueous dye formulation comprises:
a) at least one disperse dye in an amount of 15 to 45 % by weight, based on said dye formulation,
b) sulfated tallow fatty alcohol ethoxylated with 32 or 60 or 77 mol of ethylene oxide, in an amount of 1 to 10 % by weight, based on the dye formulation,
c) 0 to 10 % by weight of betaine monohydrate,
d) 0 % by weight of the anionic dispersant,
e) 0.1 to 1.0 % by weight of antifoam, and/or
0.2 to 0.3 % by weight of preservative, and/or
0.1 to 1.0 % by weight of thickener, and/or
10 to 35 % by weight of antifreeze agent, and
f) water.

16. A process for the preparation of an aqueous dye formulation, according to claims 1 to 15, which comprises milling the water-insoluble to sparingly water-soluble dye in water, with the addition of the anionic compound used as component b) and with the further optional addition of the anionic dispersant used as component d), to a particle size of less than 10 », the remaining components being added before, during or after the milling operation.

17. Use of an aqueous dye formulation according to claims 1 to 16 for the preparation of dye liquors or print pastes for dyeing or printing synthetic textile materials.

18. Use of an aqueous dyeing formulation according to claims 1 to 16 for the printing of support materials for transfer printing.

19. Use according to claim 18 for the printing of paper as support material.

## Revendications (Revendications pour l'(les) Etat(s) contractant(s) suivant(s): CH, DE, FR, GB, IT, LI)

1. Préparations aqueuses de colorants, caractérisées en ce qu'elles contiennent
a) au moins un colorant de dispersion à raison de 15 à 45 % en poids par rapport à la préparation de colorants,
b) un alkylphénol sulfaté et polyéthoxylé avec au moins 20 moles d'oxyde d'éthylène dont le résidu alkyle comporte de 2 à 12 atomes de carbone ou un alcool gras sulfaté polyéthoxylé par au moins 20 moles d'oxyde d'éthylène, en une quantité comprise entre 1 et 10 % en poids par rapport à la préparation de colorants,
c) éventuellement de la bétaïne monohydratée,
d) éventuellement un agent de dispersion anionique de formule générale I : 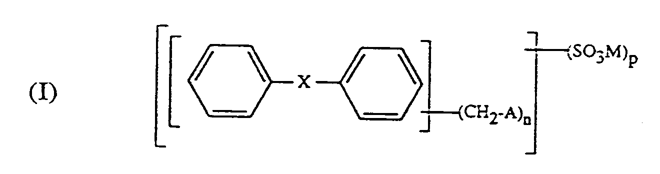 dans laquelle
X symbolise une liaison directe ou un atome d'oxygène,
A représente un atome d'hydrogène ou le résidu d'un composé aromatique qui est lié, par l'intermédiaire d'un atome de carbone de son noyau, au groupe méthylène,
n et p représentent indépendamment l'un de l'autre un nombre compris entre 1 et 4 et
M représente un cation monovalent, et
éventuellement des produits de condensation de ces composés avec du formaldéhyde; ainsi que
e) éventuellement d'autres adjuvants, et
f) de l'eau.

2. Préparations aqueuses de colorants conformes à la revendication 1, caractérisées en ce que le colorant de dispersion insoluble ou faiblement dans l'eau est présent à raison de 25 à 35 % en poids par rapport à la préparation de colorants.

3. Préparations aqueuses de colorants conformes à la revendication 1, caractérisées en ce que le composant éthoxylé b) est présent à raison de 4 à 6 % en poids par rapport à la préparation de colorants.

4. Préparations aqueuses de colorants conformes aux revendications 1 à 3, caractérisées en ce que le composant b) est un 4-nonylphénol sulfaté et éthoxylé par 35 moles d'oxyde d'éthylène ou un iso-octylphénol sulfaté et éthoxylé par 25 moles d'oxyde d'éthylène.

5. Préparations aqueuses de colorants conformes aux revendications 1 à 3, caractérisées en ce que le composant b) est un alcool gras de suif sulfaté et éthoxylé par 32, 60 ou 77 moles d'oxyde d'éthylène.

6. Préparations aqueuses de colorants conformes aux revendications 1 à 5, caractérisées en ce que le composant c), la bétaïne monohydratée, est présent à raison de 0 à 10 % en poids par rapport à la préparation de colorants.

7. Préparations aqueuses de colorants conformes à la revendication 6, caractérisées en ce que le composant c), la bétaïne monohydratée, est présent à raison de 3 à 8 % en poids par rapport à la préparation de colorants.

8. Préparations aqueuses de colorants conformes à une des revendications 1 à 7, caractérisées en ce que l'agent de dispersion (composant d) correspond à la formule générale (IA) 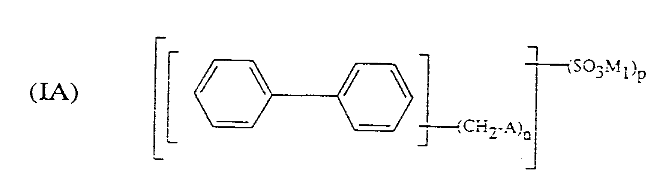 dans laquelle
A représente le résidu d'un composé aromatique qui est lié par l'intermédiaire d'un atome de carbone de son noyau au groupe méthylène,
M₁ représente un atome de sodium, de potassium ou de lithium ou une molécule de triéthanolamine ou de triisopropanolamine et
n et p représentent indépendamment l'un de l'autre un nombre compris entre 1 et 4.

9. Préparations aqueuses de colorants conformes à la revendication 8, caractérisées en ce que l'agent de dispersion anionique (composant d) correspond à la formule générale (IB) 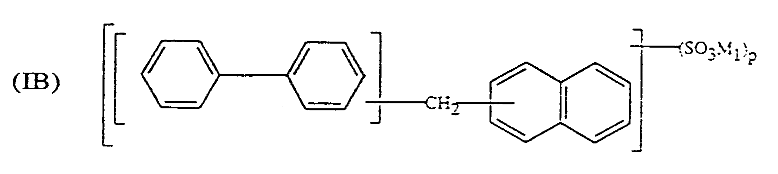 dans laquelle
M₁ représente un atome de sodium, de potassium ou de lithium ou une molécule de triéthanolamine ou de triisopropanolamine.

10. Préparations aqueuses de colorants conformes aux revendications 1 à 9, caractérisées en ce que l'agent de dispersion anionique (composant d) est présent à raison de 0 à 4 % en poids par rapport à la préparation de colorants.

11. Préparations aqueuses de colorants conformes à la revendication 10, caractérisées en ce que l'agent de dispersion anionique (composant d) est présent à raison de 1 à 2 % en poids par rapport à la préparation de colorants.

12. Préparations aqueuses de colorants conformes aux revendications 1 à 11, caractérisées en ce que l'agent de dispersion anionique (composant d) présente un rapport carbone/soufre organique supérieur à 15/1 et la quantité d'électrolyte dans l'agent de dispersion sec, exprimée sous forme de Na₂SO₄, est inférieure à 1 % en poids.

13. Préparations aqueuses de colorants conformes aux revendications 1 à 12, caractérisées en ce que les autres adjuvants (composant e) sont un agent anti-mousse, un agent conservateur, un épaississant et/ou un agent anti-gel.

14. Préparations aqueuses de colorants conformes à la revendication 1, caractérisées en ce qu'elles contiennent
a) au moins un colorant de dispersion à raison de 15 à 45 % en poids par rapport à la préparation de colorants,
b) du 4-nonylphénol sulfaté et éthoxylé par 35 moles d'oxyde d'éthylène, ou de l'iso-octylphénol sulfaté et éthoxylé par 25 moles d'oxyde d'éthylène, à raison de 1 à 10% en poids par rapport à la préparation de colorants,
c) de 0 à 10 % en poids de bétaïne monohydratée,
d) de 0 à 4 % en poids de l'agent de dispersion anionique de formule générale (IB) 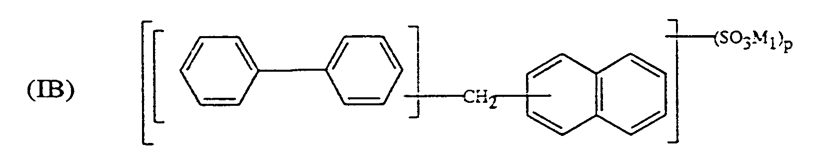 dans laquelle
M₁ représente un atome de sodium, de potassium ou de lithium ou une molécule de triéthanolamine ou de triisopropanolamine, et
p représente un nombre compris entre 1 et 4.
e) de 0,1 à 1,0 % en poids d'un agent anti-mousse, et/ou
de 0,2 à 0,3 % en poids d'un agent conservateur, et/ou
de 0,1 à 1,0 % en poids d'un épaississant, et/ou
de 10 à 35 % en poids d'un agent anti-gel, ainsi que
f) de l'eau.

15. Préparations aqueuses de colorants conformes à la revendication 1, caractérisées en ce qu'elles contiennent
a) au moins un colorant de dispersion à raison de 15 à 45 % en poids par rapport à la préparation de colorants,
b) un alcool gras de suif sulfaté et éthoxylé par 32, 60 ou 77 moles d'oxyde d'éthylène, à raison de 1 à 10 % en poids parrapport à la préparation de colorants,
c) de 0 à 10 % en poids de bétaïne monohydratée,
d) 0 % en poids d'un agent de dispersion anionique,
e) de 0,1 à 1,0 % en poids d'un agent anti-mousse, et/ou
de 0,2 à 0,3 % en poids d'un agent conservateur, et/ou
de 10 à 35 % en poids d'un agent anti-gel, ainsi que
f) de l'eau.

16. Procédé pour la fabrication de préparations aqueuses de colorants conformes aux revendications 1 à 15, caractérisé en ce que l'on broie le colorant insoluble ou difficilement soluble dans l'eau, dans de l'eau en présence du composé anionique (composant b) et éventuellement en présence de l'agent de dispersion anionique (composant d) jusqu'à ce que la taille des particules soit inférieure à 10 »m, les autres composants étant ajoutés avant, pendant ou après le procédé de broyage.

17. Utilisation des préparations aqueuses de colorants conformes aux revendications 1 à 15 pour la préparation de bains de teinture ou de pâles d'impression pour la teinture ou l'impression de matériaux textiles synthétiques.

18. Utilisation des préparations aqueuses de colorants conformes aux revendications 1 à 15 pour l'impression de supports servant à l'impression par transfert.

19. Utilisation conforme à la revendication 18 pour l'impression de papier servant comme support.

## Revendications (Revendications pour l'(les) Etat(s) contractant(s) suivant(s): ES)

1. Procédé pour la préparation de préparations aqueuses de colorants, caractérisé en ce que l'on mélange
a) au moins un colorant de dispersion à raison de 15 à 45 % en poids par rapport à la préparation de colorants,
b) un alkylphénol sulfaté et polyéthoxylé avec au moins 20 moles d'oxyde d'éthylène dont le résidu alkyle comporte de 2 à 12 atomes de carbone ou un alcool gras sulfaté polyéthoxylé par au moins 20 moles d'oxyde d'éthylène, en une quantité comprise entre 1 et 10% en poids par rapport à la préparation de colorants,
c) éventuellement de la bétaïne monohydratée,
d) éventuellement un agent de dispersion anionique de formule générale I : 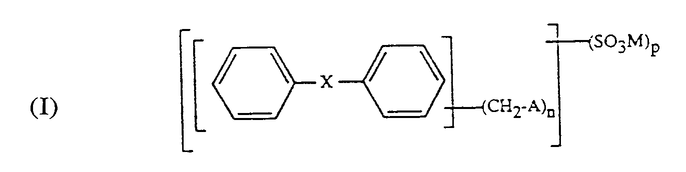 dans laquelle
X symbolise une liaison directe ou un atome d'oxygène,
A représente un atome d'hydrogène ou le résidu d'un composé aromatique qui est lié, par l'intermédiaire d'un atome de carbone de son noyau, au groupe méthylène,
n et p représentent indépendamment l'un de l'autre un nombre compris entre 1 et 4 et
M représente un cation monovalent, et éventuellement des produits de condensation de ces composés avec du formaldéhyde, ainsi que
e) éventuellement d'autres adjuvants, et
f) de l'eau.

2. Procédé conforme à la revendication 1, caractérisé en cè que le colorant de dispersion insoluble ou faiblement dans l'eau est présent à raison de 25 à 35 % en poids par rapport à la préparation de colorants.

3. Procédé conforme à la revendication 1, caractérisé en ce que le composant éthoxylé b) est présent à raison de 4 à 6 % en poids par rapport à la préparation de colorants.

4. Procédé conforme aux revendications 1 à 3, caractérisé en ce que le composant b) est un 4-nonylphénol sulfaté et éthoxylé par 35 moles d'oxyde d'éthylène ou un iso-octylphénol sulfaté et éthoxylé par 25 moles d'oxyde d'éthylène.

5. Procédé conforme aux revendications 1 à 3, caractérisé en ce que le composant b) est un alcool gras de suif sulfaté et éthoxylé par 32, 60 ou 77 moles d'oxyde d'éthylène.

6. Procédé conforme aux revendications 1 à 5, caractérisé en ce que le composant c), la bétaïne monohydratée, est présent à raison de 0 à 10 % en poids par rapport à la préparation de colorants.

7. Procédé conforme à la revendication 6, caractérisé en ce que le composant c), la bétaïne monohydratée, est présent à raison de 3 à 8 % en poids par rapport à la préparation de colorants.

8. Procédé conforme aux revendications 1 à 7, caractérisé en ce que l'agent de dispersion (composant d) correspond à la formule générale (IA) 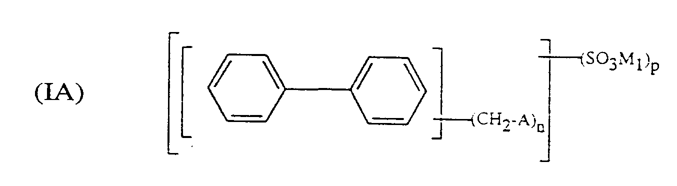 dans laquelle
A représente le résidu d'un composé aromatique qui est lié, par l'intermédiaire d'un atome de carbone de son noyau, au groupe méthylène,
M₁ représente un atome de sodium, de potassium ou de lithium ou une molécule de triéthanolamine ou de triisopropanolamine et
n et p représentent indépendamment l'un de l'autre un nombre compris entre 1 et 4.

9. Procédé conforme à la revendication 8, caractérisé en ce que l'agent de dispersion anionique (composant d) correspond à la formule générale (IB) 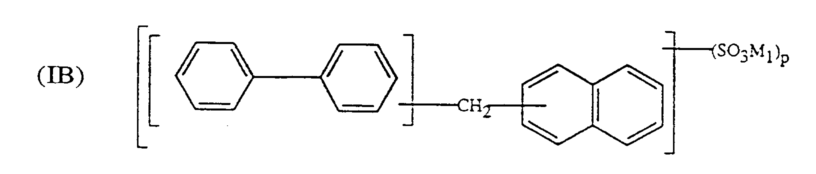 dans laquelle
M₁ représente un atome de sodium, de potassium ou de lithium ou une molécule de triéthanolamine ou de triisopropanolamine.

10. Procédé conforme aux revendications 1 à 9, caractérisé en ce que l'agent de dispersion anionique (composant d) est présent à raison de 0 à 4 % en poids par rapport à la préparation de colorants.

11. Procédé conforme à la revendication 10, caractérisé en ce que l'agent de dispersion anionique (composant d) est présent à raison de 1 à 2 % en poids par rapport à la préparation de colorants.

12. Procédé conforme aux revendications 1 à 11, caractérisé en ce que l'agent de dispersion anionique (composant d) présente un rapport carbone/soufre organique supérieur à 15/1 et la quantité d'électrolyte dans l'agent de dispersion sec, exprimée sous forme de Na₂SO₄, est inférieure à 1 % en poids.

13. Procédé conforme aux revendications 1 à 12, caractérisé en ce que les autres adjuvants (composant e) sont un agent anti-mousse, un agent conservateur, un épaississant et/ou un agent anti-gel.

14. Procédé conforme à la revendication 1, caractérisé en ce que les préparations aqueuses de colorants contiennent
a) au moins un colorant de dispersion à raison de 15 à 45 % en poids par rapport à la préparation de colorants,
b) du 4-nonylphénol sulfaté et éthoxylé par 35 moles d'oxyde d'éthylène, ou de l'iso-octylphénol sulfaté et éthoxylé par 25 moles d'oxyde d'éthylène, à raison de 1 à 10 % en poids par rapport à la préparation de colorants.
c) de 0 à 10 % en poids de bétaïne monohydratée,
d) de 0 à 4 % en poids de l'agent de dispersion anionique de formule générale (IB) 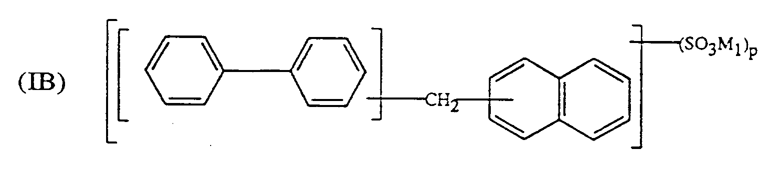 dans laquelle
M₁ représente un atome de sodium, de potassium ou de lithium ou une molécule de triéthanolamine ou de triisopropanolamine, et
p représente un nombre compris entre 1 et 4.
e) de 0,1 à 1,0 % en poids d'un agent anti-mousse, et/ou
de 0,2 à 0,3 % en poids d'un agent conservateur, et/ou
de 0,1 à 1,0 % en poids d'un épaississant, et/ou
de 10 à 35 % en poids d'un agent anti-gel, ainsi que
f) de l'eau.

15. Procédé conforme à la revendication 1, caractérisé en ce que les préparations aqueuses de colorants contiennent
a) au moins un colorant de dispersion à raison de 15 à 45 % en poids par rapport à la préparation de colorants,
b) un alcool gras de suif sulfaté et éthoxylé par 32, 60 ou 77 moles d'oxyde d'éthylène, à raison de 1 à 10 % en poids par rapport à la préparation de colorants,
c) de 0 à 10 % en poids de bétaïne monohydratée,
d) 0 % en poids d'un agent de dispersion anionique,
e) de 0,1 à 1,0 % en poids d'un agent anti-mousse, et/ou
de 0,2 à 0,3 % en poids d'un agent conservateur, et/ou
de 10 à 35 % en poids d'un agent anti-gel, ainsi que
f) de l'eau.

16. Procédé pour la fabrication de préparations aqueuses de colorants conformes aux revendications 1 à 15, caractérisé en ce que l'on broie le colorant insoluble ou difficilement soluble dans l'eau, dans de l'eau en présence du composé anionique (composant b) et éventuellement en présence de l'agent de dispersion anionique (composant d) jusqu'à ce que la taille des particules soit inférieure à 10 »m, les autres composants étant ajoutés avant, pendant ou après le procédé de broyage.

17. Utilisation des préparations aqueuses de colorants conformes aux revendications 1 à 16 pour la préparation de bains de teinture ou de pâtes d'impression pour la teinture ou l'impression de matériaux textiles synthétiques.

18. Utilisation des préparations aqueuses de colorants conformes aux revendications 1 à 16 pour l'impression de supports servant à l'impression par transfert.

19. Utilisation conforme à la revendication 18 pour l'impression de papier servant comme support.
